# EUROPEAN PATENT APPLICATION

(11) **EP 3 971 028 A1**
(43) Date of publication of application: **23.03.2022**
(21) Application number: 20196997.9
(22) Date of filing: 18.09.2020
(51) Int. Cl.: B60N 3/04

(54) **AUTOMOTIVE TRIM PART WITH INTEGRATED HEATING DEVICE**

(71) Applicant: Autoneum Management AG, 8406 Winterthur (CH)
(72) Inventor: Merrien, Raphael, 8408 Winterhtur (CH); Bendell, Edward, 8050 Oerlikon Zürich (CH)

(57) **Abstract**

Automotive trim part with integrated heating device comprising at least an air permeable fibrous layer, a facing layer and a heating element, whereby the heating element is between the facing layer and the air permeable layer and materially connected to the adjacent layers, and further comprising means-for-connecting the heating element to a power supply, characterised in that at least part of the means-for-connecting and at least part of the material of the adjacent layer or layers are engulfed by a resin such that the means-for-connecting are at least partly encapsulated in the thermoplastic resin and materially connected to the adjacent layers.

## Description

### Technical Field

The present invention generally relates to an automotive trim part with an integrated heating device and a method for producing such a trim part

### Background Art

Cars and passenger vehicles based on petrol/diesel engines are in general heated by using the heat coming from the powertrain and/or motor, generated during combustion of the fuel. In electric and hybrid-electric cars, this source of heat is no longer fully available. Hence, the vehicle is heated by the same electricity that the car needs for its driving range.

Traditionally the passenger compartment of a car is heated by an HVAC system; heated air is blown into the passenger compartment. This is a very ineffective way of transporting heat to the passengers. The passenger comfort may only be achieved after a long time, while heating up not only the direct surroundings of the passengers, but also the full air volume and the surrounding car parts of the passenger compartment. For an electric vehicle, this would mean that there is a loss of energy, in particularly at the beginning of a drive in an environment with low ambient temperatures. While at the same time, the passenger may be in discomfort. For this reason, electrical surface heating may be seen to be attractive.

Additionally in other situations in a car an alternative way of heating might be an advantage, for instance to keep certain areas like the battery or the storage area at a temperature above a certain temperature.

Although heated floor mats may be known, they are not commonly used. In addition, heat-radiating panels are disclosed in the literature but hardly seen on vehicles on the road. Furthermore, post integration of trim parts with a heating element, in particular with the on-board wire harness, is costly and cumbersome. Therefore post integration of such heating devices is mainly done via the cigarette lighter, however the current is limited for providing higher power for either larger, or faster warming heaters. In addition, loose cables and connectors or cables that can break are a hazard. Not only for tripping, or entangling, but they may be responsible for a power short cut or form a fire hazard.

In the past, attempts have been made to eliminate the loose cable by integrating connectors into the floor mat and the main flooring part. For instance, DE102015203706 discloses a push button type connector that connects the lower surface of the mat with the main floor part underneath. For the disclosed solution both - the floor mat and the main flooring part - need wiring and connectors integrated, increasing the overall cost and process steps. The connection is under the floor mat flush with the main floor part, and as both the connector and receiver are substantially horizontally orientated, the risk of soiling and/or water damage increases the risk of failure of the connection. Furthermore retrofitting of a vehicle later on is expensive and near to impossible with this system.

The objective of the present invention is to provide an automotive trim part with an integrated heating device and a method for producing such a trim part, without the disadvantages of the state of art and more particular an automotive trim part with an integrated heating device that is optimised in the production and straightforward to fit or retrofit into the vehicle, like for instance an electric vehicle or a hybrid electric vehicle.

### Summary of invention

The object is achieved by an automotive trim part with integrated heating device according to claim 1 and a method of producing such a trim part.

In particular, with an automotive trim part with integrated heating device comprising at least an air permeable fibrous layer, a facing layer and a heating element, whereby the heating element is between the facing layer and the air permeable layer and materially connected to the adjacent layers, and further comprising means-for-connecting the heating element to a power supply, characterised in that at least part of the means-for-connecting and at least part of the material of the adjacent layer or layers are engulfed by a thermoplastic resin such that the means-for-connecting are at least partly encapsulated in the thermoplastic resin and materially connected to the adjacent layers.

Surprisingly, by engulfing part of the means-for-connecting and the adjacent layers, in particular the air permeable fibrous layer, with the thermoplastic resin it is possible to materially connect the means-for-connecting to the floor mat and create an appealing and preferably flush connection that is strong and able to withstand tearing and bending stresses during normal use. As the full area is engulfed the material is stronger and less prone to breakage and chipping. Depending on the material chosen, the connecting area might be further enhanced visually or functionally with for instance raised surface patterns, like ribbing, colours or logos. The inventive connection zone may be used with all types of connectors or cables and may be adapted to local needs, as shown in preferred embodiments. It may be used to connect the trim part direct to the power supply and/or control unit, or indirect via adjacent trim part or parts with a similar connection zone.

Due to the over-moulding of the exit area of the means-for-connecting it is possible to prevent damage due to any pulling to these means, like for instance the cable. In particular, in a preferred solution where at least one connector part is included in the over moulded area the connection between two connectors will fail but not the wiring within the trim part, hence no damage will occur to the heating element or the connection to the heating element.

By "means-for-connecting", all components are meant that connect and/or control the power supply to the heating element. In its simplest form the means-for-connecting is a power cable with a plug or connector that is able to connect the heating element to a power supply or an adjacent trim part. However, the means of connecting might also include at least one male or female connector part, preferably the connector part is connected with the heating element within the periphery of the trim part. Either it is enclosed between the porous layer and the facing layer, or it is placed in a cut-out such that it is within the boundaries' of the periphery of the trim part after the application of the engulfing resin. The means might also include other electrical components necessary for the controlling and/or sensors needed to control the power and/or current to the heating element. It might also include wireless controlling units to control the heating element with use of a wireless controller. In an alternative solution, the means-for-connecting are able to connect to a second trim part for either a combined power supply and/or controlling of the temperature.

The Automotive trim part with integrated heating device according to the main claim comprises at least an air permeable layer, a facing layer and a planar heating element, whereby the heating element is between the facing layer and the air permeable layer and materially connected to the adjacent layers.

The heating element is preferably a resistive heater based on a resistance element, preferably the heating element is at least one of a metal based element for instance a metal wire, ribbon or an etched or printed metal circuit, or a carbon based element, for instance a carbon printed circuit, coated tread or carbon yarn or a combination of carbon and metal elements.

For ease of handling, the heating element might be attached to or integrated in a carrier layer like a textile, for instance a woven fabric, a nonwoven, a foil or a film. The heating element might be attached to or integrated in the carrier layer by stitching, knitting, or gluing to the material, or might be interwoven as part of the fabric. Alternatively, the heating element might be printed on the carrier material or directly on the fibrous layer or the surface layer. Preferably, the carrier layer is a thin material layer that does not interfere with the overall function of the part; however, the main function of the carrier is to maintain the dedicated position of the heating element during the production of the trim part. The carrier layer might disintegrate during the production process of the trim part, for instance it might melt and connect to the adjacent layers.

Preferably, the heating element is formed in a grid type layout of multiple parallel heating wires or in the form of a serpentine. The heating element might be formed of at least one circuit, however it might also be formed of multiple circuits, that may have means-for-connecting each separate or combined. For instance, multiple circuits might be having an intertwined layout such that if one circuit fails the other or others will still cover the full surface. An alternative way of using multiple circuits is having dedicated areas that can be heated independent of each other to obtain a more flexible heating effect, whereby areas can be started or stopped heating depending on the needs of the passenger or depending on sensors.

Preferably a heating element comprises at least one circuit in the form of a wire embroidered on separate material, like a nonwoven, textile or fabric or alternatively is embroidered directly to air permeable fibrous material.

Alternatively a heating element comprises at least one circuit in the form of a heating grid woven within a fabric.

At least part of the means-for-connecting and at least part of the material of the adjacent layer or layers are engulfed with a resin such that the means-for-connecting are at least partly encapsulated in the resin and materially connected to the adjacent layers, the resin forming a solid connection between the adjacent layers and the means-for-connecting.

Surprisingly by engulfing both the means-for-connecting and the adjacent layers, it is possible to create a simple connector solution that is robust and prevents any damage to the connecting area and/or cables. In particular, pulling and bending of the area containing electrical appliances will be eliminated, and the durability will be increased.

Preferably a resin is used that is able to penetrate and bind to the adjacent fibrous layers as well as to the surface of the different means-for-connecting, for instance wires and/or connector plugs and/or connecting areas between the wires and the connector plugs.

The resin can be either a thermoset or thermoplastic material; preferably, pronounced elastic properties are inherent in the material.

For instance a thermoset material is used chosen from an epoxy or phenolic or polyurethane based material, a silicon based material or a synthetic or natural rubber material.

Preferably, the resin is a polymer or copolymer selected from the group consisting of polyolefin, like polyethylene (PE) or polypropylene (PP) or ethylene propylene diene monomer (EPDM) or ethylene-octene (EO), polyester or thermoplastic elastomer of polyester (TPE-E), polyamide (PA) or thermoplastic elastomer of polyamide (TPE-A), polyoxymethylene POM, acrylonitrile butadiene styrene (ABS), polyvinyl chloride (PVC), Santoprene (TPV), styrene-butadiene copolymers (e.g. SBS), thermoplastic polyurethane (TPU), or a combination of these polymers.

In one embodiment the resin material might be based on a hot melt solution, preferably a thermoplastic resin. Preferably the hot melt solution is based on a polymer or copolymer of one of polyester, like polyethylene terephthalate (PET), polyolefin, like polypropylene (PP) or polyethylene (PE), poly lactic acid (PLA), polyamide, like polyamide 6 (PA6) or polyamide 6,6 (PA6,6) or mixtures thereof.

Preferably the resin material further comprises a filler, preferably a fibrous filler, like glass fibers or carbon fibers, or an inert filler, like mica, carbon black or an inorganic filler like Barium Sulphate or Calcium carbonate or silica.

Preferably the resin material is further comprising any of a dye, additives and/or process enhancers.

The resin material used may be from a virgin, reclaimed and/ or recycled source.

The air permeable fibrous layer can be any type of felt, or textile material.

The fibrous layer might be either an air laid mat or a carded, cross-lapped mat. Eventually the mat might be needled to enhance the stiffness of the part and to obtain a stronger felt material. The advantage of needled felt is that the resin material may be able to penetrate the fibrous layer, while during use the fibers are not easily pulled out of the resinous zone ensuring a strong connection.

Alternatively, the air permeable fibrous layer is a spacer fabric, for instance a 3D knitted fabric which may be stiffened with a binder or might be a reversed carpet layer similar to the surface layer.

Adjacent the air permeable fibrous layer on the surface facing away from the heating element additional layers can be used, for instance a foam layer, either slab foam or reaction injected foam, another fibrous layer, a thin nonwoven like a scrim or a closed or open film.

The fibrous layer may comprise staple fibres and or endless filaments, preferably polyester, like polyethylene terephthalate (PET), polyolefin, preferably polypropylene (PP) or polyethylene (PE), or poly-(lactic)-acid (PLA), polyamide, like polyamide 6 or polyamide 6-6, or mixtures thereof. The fibrous layer may also contain recycled shoddy fibres such as shoddy cotton, shoddy PET or other synthetic shoddy fibres or mixtures thereof. Preferably, the fibrous layer is polyester based.

Due to the air permeability of the layer, the trim part may contribute to the overall sound absorbing needs within the area used and/or enable the acoustic performance of the parts located underneath the trim part. For instance in the case the trim part according to the invention is a floor mat, the main flooring underneath might still contribute to the overall noise attenuation even with the heating element integrated in the covering floor mat due to the overall porous layout of the trim part.

Not only the acoustic attenuation benefits from the air permeability also transfer of the heat to the passenger is enhanced by a trim part that is overall air permeable. Advantageously the material used for the lower layers underneath the heating element have a higher thermal resistance than the top surface layer to enhance a heat flow in the direction of the passenger, for instance by increasing the content of materials with a higher thermal resistance and or by compacting the fibrous layer to increase the density of the material.

Surprisingly by using an air permeable fibrous layer it was found that the heat transfer to the top was enhanced and the transfer to the lower layers was diminished, overall increasing the efficacy of the integrated heater in the trim part. In particular, the warm up time needed to create a heating effect on the surface of the trim part is reduced.

The fibres used may have a solid cross section but fibres with a hollow cross section might be preferred to make the fibrous layer lighter and/or loftier.

In case the fibrous layer is needled, a low amount of additional binder, preferably thermoplastic, might be added to the fibre blends to enhance the durability of the carpet after it is moulded. Preferably at least 0-50 percent of binder, for instance in the form of binder staple fibres are used. As binder a low melt polyester or polyolefin, with a melt point lower than that of the staple fibres just discussed can be used. Preferably, a polyester bi-component fibre is used for instance a fibre with a PET core and a Co-Polyester sheath, whereby only the sheath melts in order to achieve the bonding of the staple fibres.

In case the fibrous layer is not mechanically needled, a higher amount of binder might be mixed in the original fibres to enable the binding of the fibers between each other during moulding and thereby forming a bonded felt material. The binder content is in this case up to 50 percent in weight of binder, preferably between 10 and 40 percent in weight of binder, ever more preferred between 20 and 30 percent in weight of binder.

Preferably, the binder used in the fibrous layer is strong enough to bind the carrier layer of the heating element to the surface of the fibrous layer.

The fibrous layer might be a combination of frizzy hollow
conjugate fibers with bi-component binder fibers and shoddy material, for instance cotton shoddy or polyester shoddy.

For example, the fibrous layer consists of 10 to 40 percent in weight of binder, 10 to 70 percent in weight of filler, preferably solid, fibers and 10 to 70 percent in weight of frizzy, preferably hollow, fibers and wherein the total amount adds to 100 percent by weight.

Preferably a part of the filler material in the examples just given might be replaced by the recycled non fibrous material. For instance foam chips or scraps of trim parts might be mixed in the fibrous layer, preferably up to 30 percent, more preferably up to 25 percent by weight.

For example, the fibrous layer consists of 10 to 40 percent by weight of binder, 10 to 40 percent by weight of filler, preferably solid, fibers and 10 to 60 percent by weight of frizzy, preferably hollow, fibers and 10 to 50 percent by weight shredded foam pieces and wherein the total amount adds to 100 percent by weight.

Alternatively, the air permeable fibrous layer might be a carpet layer, for instance a tufted or nonwoven carpet layer as defined for the top surface layer. Putting a tufted layer facing downwards, placed against the main flooring part might enhance the anti-skidding performance of the floor mat.

In case the trim part is a floor mat, the air permeable fibrous layer may be combined with a surface treatment or an additional layer on the surface destined to face the floor of the vehicle to include an anti-skidding function in this surface. For instance, the air permeable fibrous layer is a nonwoven carpet layer that may be flame treated to obtain a rough surface to enhance the anti-slip effect. Alternatively, a rough surface might be obtained by applying micronized rubber crumbles to the surface, or to use a thin course tuft layer to the back. Another alternative layer might be an additional natural or synthetic rubber layer including a spiked surface or protuberances, which is used as a back layer and will be hold by the engulfed area in addition.

In addition, a thin polyurethane foam layer might be applied to the back of the fibrous layer. As the main connection of the engulfed zone and the adjacent layers is obtained by the engulfing of the top surface layer and the fibrous layer, the thin foam layer only needs to be engulfed to obtain a nice finish of the part but not for maintaining the connection between the engulfed area and the rest of the floor part.

Preferably, the area weight of the fibrous layer is between 100 and 600 (g/m²), more preferably between 150 and 400 (g/m²).

Preferably, the airflow resistance of the fibrous layer is between 500 and 4000 Rayls. Preferably between 800 and 2500 Rayls.

The air permeable fibrous layer might be lofty before forming of the part, as during the moulding of the trim part any thickness differences in the heating element might be hidden within the fibrous layer. Therefore, the surface would not show any deformation related to the integration of the heating element.

Preferably, the heater might be placed on the air permeable fibrous layer with the heating circuit facing the fibrous layer. So that any thickness difference of the heating circuit, in particularly if a wire is used, is balanced out by the fibrous layer and not by the top surface layer, hence the wiring will not become visible in the surface layer.

Preferably, the overall thickness of all layers together is equal or close to the overall thickness of the means-for-connecting and the resinous layer on the top and lower surface of the means-for-connecting in plane with the surfaces of the floor mat, such that the connecting area is as flat as the floor mat itself without sticking out substantially.

In case the connector plug is also integrated within the periphery of the trim part the thickness of the layers forming the trim part might be adapted to the height of the connector to obtain a flush or almost flush surface with the embedded connector.

The facing layer might be anyone of a tufted carpet, a nonwoven carpet, a textile fabric, like a knitted fabric, a faux-suede fabric or a woven fabric, a nonwoven fabric, a leather or a closed cell foamed layer, a film, a foil or a flocked surface layer or any combination of such layers. Facing layers might be combined with a fibrous carrier layer to strengthen, stiffen or thicken the material, or to make it more durable. Also a soft padding might be used behind the facing layer, either one of a felt or foam material.

The materials used for the trim parts according to the invention can be from a virgin, reclaimed or recycled source.

Depending on the facing layer, fibers might be used in the form of endless filaments, yarns or treads. Preferably, the fibers are made of polyester, like PET, PBT or PTT, polyamide, like PA6 or PA66 or polyolefin, like PP. The fibers can be made of virgin, reclaimed or recycled source.

In one embodiment the facing layer is a nonwoven carpet facing layer may comprise a needle punched fibrous mat, for instance produced from fibrous webs made with a carding and cross lapping process. The thus formed web is reinforced and consolidated by the reciprocating action of barbed needles repeatedly penetrating the web so that the material becomes matted and decreases in thickness. The formed web might be diloured.

The area weight of such a nonwoven carpet face layer used as standard in vehicles, are dependent on the area of use as well as the exclusivity of the car, normally in a range between 120 - 1500 g/m².

For a nonwoven carpet used as an aesthetic or decorative face layer the needle punched fibrous mat may be kept as a plain needle punch carpet or the plain needle punched carpet layer may be further enhanced by additional needling to give a more structured surface, this may be in the form of a ribbed, velour or random velour, also known as dilour. Other surface treatments to enhance the appearance without impairing the abrasion performance are also possible and fall in the scope of this disclosure. The surfaces might be cropped or uncropped. In addition, patterning using different heights of the pile or coloured yarns, or printed patterns on top of the surface layer might be used.

In another embodiment the facing layer is a tufted carpet, it might be made of a BCF yarn tufted into a primary backing layer. Preferably, the BCF yarn and/or the primary backing is made from one of polyamide, polyester or polyolefin. The yarn might be a single yarn, twisted and/or heat set, and the thus formed trim part might be piece dyed as the last production step or the yarn might be dyed before producing the tufted surface. The area weight of the tufted surface layer might be depending on the purpose of the trim part between 200 and 2000 gsm.

Other types of tufted carpet layers known in the art may be used as a facing layer.

An additional glue layer or glue layers might be used on the back surface of the face layer to glue the face layer to a surface of the heater element and or an adjacent layer. Preferably, a polyurethane based glue or a polyester based glue might be used.

Advantageously, using a polyester based glue increases the initial heat transfer from the heating element to the surface layer. The time to heat from a cold state to a warm surface was reduced, while using a polyester glue layer between the heating element and the cover layer.

In case the face layer is a tufted carpet, the polyester glue might be used to obtain a fiber lock and/or tuft lock within the surface layer as well as for binding the surface layer to the heating element and or to the carrier layer of the heating element.

In case the heating element has no carrier layer, the glue might be used to bind the face layer to the fibrous layer, thereby embedding the heating element in the glue layer.

By encapsulating any area where heater components meet cold wires, or a connector, with a resin according to the invention, the design might prevent short circuits or electric short-cuts which might otherwise be caused by water ingress or deformation or even damage of the connection area.

Eventually other electrical components like lighting elements, preferably LED type, might be included in the trim part and might use the same type of connecting area for the means-for-connecting the element to a suitable power supply.

### Method of over moulding the connector

Method of producing the automotive trim part with integrated heating device according to one of the preceding claims with at least the steps of
- stacking at least a heating element, and the fibrous backing layer, whereby the fibrous layer already has a dedicated region or cut-out for a connecting zone,
- laminating the stacked layers together,
- connecting the means-for-connecting to the heating element before the laminating step, or after the laminating step, characterised in that the method further comprises the step of local injection moulding a resin to engulf at least part of the means-for-connecting and at least part of the material of the adjacent layer or layers by the resin such that the means-for-connecting are at least partly encapsulated in the thermoplastic resin and materially connected to the adjacent layers.

Method of producing the automotive trim part with integrated heating device, according to the invention with at least the steps of
- stacking at least a textile layer with the heating element and cables optionally attached to or integrated in a thin carrier material as disclosed and the fibrous backing layer, whereby the fibrous layer already has a spared region or cut-out for the connector,
- laminating the stacked layers together, if needed an additional glue layer might be used, like a hot melt, polyethylene powder, adhesive foil or binder fibers, or a polyester or polyurethane based glue,
- Optionally the connector might be attached before the lamination or after the lamination step,
- The step of local injection moulding a resin to encapsulate the connector and to bond the connector to the surrounding layers. The injection moulding of the resin should be such that the material for the encapsulation is attached to and/or penetrated into all adjacent layers forming a connection after release of the part from the mould.

Surprisingly, by using local injection moulded resin, it is possible to obtain a strong connection to the adjacent layers and a watertight encapsulation around the connector and the connecting wire. This ensures that the contacts are not oxidising over time and prolongs the lifetime of the integrated heater in the trim part. In addition, the handling of the trim part is now much easier.

The socket and/or connector chosen can be dependent on the requirements of the carmaker, and if the trim part is used in aftermarket retrofitting of cars. The floor mat thus obtained can be easily connected to the available wire harness system of the car. Due to the increase use of electronics in the passenger compartment of the car, it is now common to have connector boxes under the seats for instance. The place of the connector inside the mat can be adapted depending on the location of such a connector box within the car.

Preferably the connector area is falling within the horizontal boundaries of the felt material. However it might also stick out of the side of the trim part, but still be encapsulated by the thermoplastic resin according to the invention. Hence the connector as well as the adjacent area of connecting wires or cables within the carpet are protected by the over moulded area to obtain a more durable connection less prone to breaking due to mishandling the connecting area, for instance by standing on it, bending or pulling.

Alternatively, the connector area is falling within the horizontal boundaries of the carpet but the means for connecting are not exiting in the same plane but out of plane, preferably to the underside of the trim part. Preferably the connecting zone is hidden by a face layer covering the connecting zone.

Preferably the thickness of the connector including the encapsulation is at least the same or larger than the thickness of the floor mat construction. The connector might fall within the thickness of the lower layers, whereby the carpet facing layer might be laminated after the encapsulation of the connector and might cover the connector. More preferably the connector is at least the thickness of all layers, whereby the surface of the encapsulation is in plane or above the carpet facing layer or alternatively in plane or above the layer underneath the carpet facing layer.

In case the surface of the over moulded resin is visible, it might be embellished with for instance ribs, logos or pictograms to increase the haptic and/or aesthetics of the encapsulation. By doing so the encapsulated connector might be more recognisable, and/or easy to handle during installing of the floor mat. Eventually a LED might be placed within the encapsulation for functional control of the mat.

Optional a glue layer between the carpet facing layer and the adjacent layer, and/or between the fibrous layer and an optional covering layer might be used.

A Trim part with at least one fibrous layer and the encapsulated connector according to the invention might be used as an interior trim part or exterior trim part for a vehicle. For instance as the already shown floor mat, for the front and/or the back seats, door trims, parcel shelves, visor part, hush panel or trim parts on or near the dash panel or underneath the dash panel, or in the exterior of a car, for instance around the engine, in particular a motor for a hybrid or electric car.

Further benefits and advantages of the present invention will be explained with help of the drawings. Any features in the drawings and its description may be combined with the general background of the invention.

### Brief description of drawings

Figure 1 Example of a trim part in the form of a heated floor mat according to the invention.
Figure 2 is a close up view of a connector integrated in the trim part according to the invention.
Figure 3 is showing the cross section A-A' of figure 2
Figure 4 is showing the cross section B-B' of figure 2
Figure 5 is showing different possible solution for integrating the means-for-connecting in the trim part according to the invention.

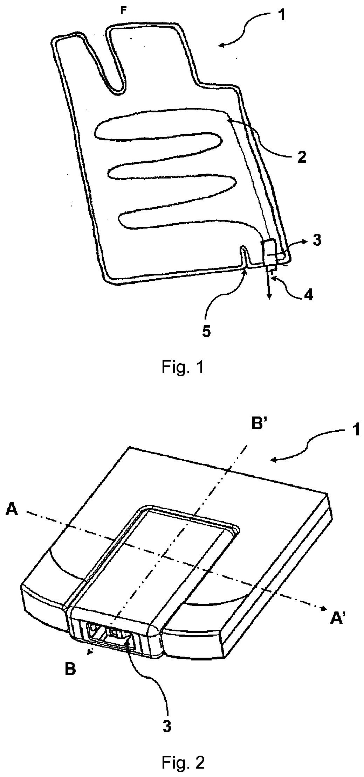

Figure 1 shows an example of a trim part according to the invention. The trim part 1 is formed as a floor mat with an integrated heater in the form of a heating element 2 placed within the layers of the trim part. Such a carpet construction has at least a fibrous lower layer and a facing layer, for instance a carpet layer. The heater can be placed between these layers as a heating element alone or may be placed between the layers as a heating element on a carrier construction, for instance a nonwoven fleece, fabric or textile layer. The heating element might be connected to at least one of the adjacent layers to prevent the heating element from moving within the construction during production and/or use. Preferable all layers are laminated to each other thereby fixating the heater within the layers. Although the heater is shown on the drawing, in practise the heater is placed invisible between the layers. The heating element has at least two cables or wires coming from it, for the connection to the power supply. Other connecting wires might be available for instance for connecting to control units integrated in the heater within the trim part, or to be connected outside of the trim part. Wires might be grouped to have at least one connector or multiple connectors exiting the trim part, preferably the exit 4 is at the rim of the trim part, parallel to the horizontal boundaries of the trim part as shown in the example. However other direction might also be beneficial depending on the location and use of trim part within the vehicle.

In the trim part of the example formed as a floor mat, with F the front of the car is indicated, showing on the front side the flaps needed for the pedal area. In the example, the connector is located opposite the pedal area, directed to the car seats. This is advantageous as most car models have a connecting box under the seat to connect any electronic device to a power system of the car.

The power cables or wires coming from the heater 2 are connected to a power connector for the connection to a suitable power supply (not shown), normally a male-female connector is used whereby preferably the male connector is placed within the trim part. Depending on the connector used the actual connection of the cables and the connector might be inside the housing of the connector or before the housing of the connector. Preferably both the connector and the cable connection are encapsulated in the thermoplastic resin 3 forming a connecting zone or area, further protecting the electric contacts and the connection. This prevent the actuall connection from getting in contact with water or condense water, therefor decreasing corrosion or oxidation of the connection. At the same time the connection is protected against tampering.

According to the invention the connector including at least part of the connected cables is encapsulated by an injection moulded process such that the connector and cables are protected and at the same time attached to the surrounding layer or layers, in particularly to at least the fibrous layer. Optionally the area of the integrated connector 3 is created as a flap, separated from the main surface of the mat by a small cut or indent 5, enabling a higher degree of movement of the area. This will increase the handling of the floor mat during installing in, or taking out of the car, in particular plugging and unplugging of the floor mat is eased.

In one embodiment the carpet facing layer is placed on top of the fibrous layer after the local injection moulding of the resin to encapsulate the connector and materially connect it to the adjacent layer or layers. In this case the carpet surface does not have a cut-out for the connector but is covering the connector such that it is no longer visible from the carpet surface.

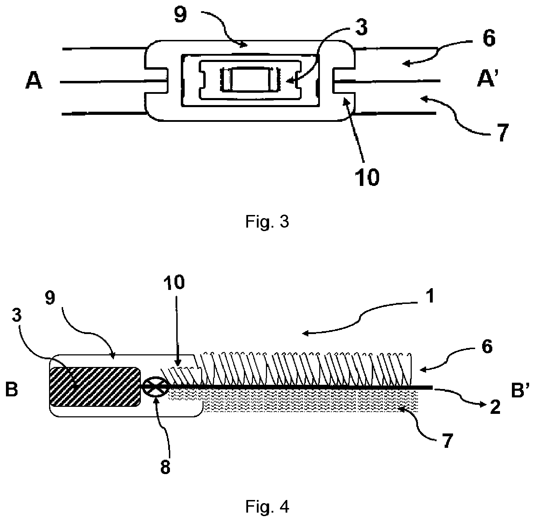

Figure 2 is showing an example of an encapsulated connector - in this case a socket or housing with an female connector 3 - between the material of the adjacent layers. The socket is placed in a suitable cut-out in the final laminated trim part and connected to the wires of the heater (not shown). In the case shown the trim part 1 is made of 2 layers, a decorative face layer and a fibrous backing layer. The connector is encapsulated with a thermoplastic resin. The resin is at the same time materially connected to the material of the adjacent layers. In the description of figure 3 and 4, the cross sections A-A' and B-B' will be further disclosed.

In figure 3 and 4, the cross sections A-A' and B-B' are shown. In both figure a trim part with a carpet face layer 6 and an air permeable fibrous layer 7 forming a backing layer is shown. In between the two layer the heating element 2 is placed and all layers are laminated together.

The cut-out for the connector is preferable made before the lamination step, to prevent damage to the heater between the layers. The connector can be placed in the construction before the lamination step or is connected to the wire cables of the heating element after the lamination step.

As a heating element any type of flexible heater might be used. Preferably the heating element is flat, but pliable to form into the shape of the trim part, this might be curved or bended parts or truly 3 dimensional shaped trim parts. The heated element is either laid loosely on top of the lower fibrous layer or the heating element is embroidered or glued to a textile for instance a nonwoven fleece layer and laid on top of the lower fibrous layer. Preferably the heating element is facing the lower fibrous layer. The floor mat might be sewn around the rim with a ribbon to further enhance the floor mat. Other edging technics might be used to finalise the part. Optionally other heater systems known in the art, like foil printed version, might be used.

The connection point 8, where the heating element is connected to the means-for-connecting might be placed within the connector housing 3 or before the connector housing 3 within the cut-out space, such that the connection point is also encapsulated in thermoplastic resin 9. Preferably the rim 10 of the adjacent material layers is compressed such that the thermoplastic resin can be applied above and/or underneath the rim thereby strengthening the material connection between the resin and the layers.

The connector 3 is engulfed in a resin 9, whereby the resin is also attaching and/or penetrated into the adjacent areas of the layers surrounding the connector. The encapsulating resin is at least attached and connected to the fibrous backing layer, and into the fleece layer with the heating element as shown in zone 10. In addition the encapsulating resin might be attached or bonded to the connector 3 or other means-for-connecting, for instance the connecting point, within the connecting zone formed by the over-moulded area 9.

The full face layer and/or optionally in case the face layer is formed of more than one layer at least the lower layer or layers of the face layer might be attached to the resin during the local injection moulding of the encapsulation, or might be attached after the encapsulation and cover the connector such that it is not visible on the outer facing layer.

Other appliances might be attached to the floor mat like for instance means for mounting the floor mat to the main floor, local embossed logos etc.

The floor mat might have a rubber insert for instance for placement of the pedal foot. The heating wire may be adapted to go around the area of the rubber insert, if needed.

Optionally the floor mat might have a small cut next to the connector area such that this area can function as a flexible flap enabling an easy connection to the vehicle wiring system.

Although the floor mat is shown as a floor mat for the foot well areas of a vehicle the mat can also be used in other areas of the vehicle, for instance as a heating mat for the front or back trunk area, or for instance for the heating of an animal box placed within the car.

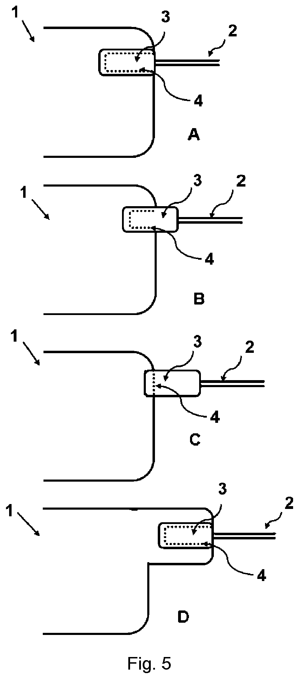

Figure 5 is showing different possible solutions for integrating the means-for-connecting in the trim part according to the invention.

In all figures A to D, schematically a trim part 1 is shown with the connecting zone 3 and the exit of the means-for-connecting 2. With a dotted line the overlap between the material of the adjacent layer and the penetration and/or engulfment of the resin material is shown. This overlapping area is the bonding zone between the resin and the adjacent layers, while all the space available in the connecting zone is taken by the resin accept for any area that belongs to a male or female connector plug.

In figure 5 A the means for connecting are engulfed in a connecting zone, that is designed within the boundaries of the trim part. In figure B and C the connecting zone is partly or fully sticking out of the boundaries of the trim part. Although in the version of figure 5C the connecting zone is outside of the boundaries of the trim the overlapping zone is still available with the rim of the adjacent material and therefore forming a solid connection to the mat.

An alternative to the flap of figure 5 C is a flap formed by the materials of the trim part, this has the advantage of a more flexible solution. The thus formed flap might be moulded together with the lamination step of the part in a 3 D shape, for instance out of the horizontal plane. The integration of the connecting zone might be as shown in figure 5D, or might be one of the solution as shown in figures 5 A to C.

Alternatively the connecting zone is not situated at the rim of the trim part but might be located anywhere on the trim part, whereby the exit of the means for connecting is not necessary parallel to the horizontal boundaries of the trim part. For instance as a connecting zone that is directed to a power supply underneath the back surface of trim part. Such trim parts might for instance be used preferably for areas which are not predominantly horizontal.

## Claims

1. Automotive trim part with integrated heating device comprising at least an air permeable fibrous layer, a facing layer and a heating element, whereby the heating element is between the facing layer and the air permeable layer and materially connected to the adjacent layers, and further comprising means-for-connecting the heating element to a power supply, **characterised in that** at least part of the means-for-connecting and at least part of the material of the adjacent layer or layers are engulfed by a resin such that the means-for-connecting are at least partly encapsulated in the resin and materially connected to the adjacent layers.

2. Automotive trim part according to claim 1 whereby at least the permeable layer and the facing layer comprise a cut-out for locating the exit area for the means-for-connecting and whereby the cut-out area including the means-for-connecting is encapsulated by the resin such that the means-for-connecting and the material of the adjacent layers are materially connected.

3. A trim part according to claim 1 or 2, whereby the adjacent fibrous material is compressed such that a thinner area is obtained around the rim of the material opposite to the connector.

4. A trim part according to one of the preceding claims whereby the resin is a thermoset or a thermoplastic resin, preferably the resin is a polymer or copolymer selected from the group consisting of polyolefin, like polyethylene (PE) or polypropylene (PP) or ethylene propylene diene monomer (EPDM) or ethylene-octene (EO), polyester or thermoplastic elastomer of polyester (TPE-E), polyamide (PA) or thermoplastic elastomer of polyamide (TPE-A), polyoxymethylene POM, acrylonitrile butadiene styrene (ABS), polyvinyl chloride (PVC), Santoprene (TPV), styrene-butadiene copolymers (e.g. SBS), thermoplastic polyurethane (TPU), or a combination of these polymers.

5. A trim part according to one of the claims 1 to 4, whereby the resin is a thermoplastic hotmelt based material, preferably the hotmelt material is based on a polymer or copolymer of one of polyester, like polyethylene terephthalate (PET), polyolefin, like polypropylene (PP) or polyethylene (PE), poly lactic acid (PLA), polyamide, like polyamide 6 (PA6) or polyamide 6,6 (PA6,6) or mixtures thereof.

6. A trim part according to at least one of the preceding claims whereby the rein material further comprises fillers, preferably a fibrous filler, like glass fibers or carbon fibers, or an inert filler, like mica, carbon black or an inorganic filler like Barium Sulphate or Calcium carbonate or silica or a combination thereof.

7. A trim part according to one of the preceding claims whereby the air permeable layer is one of a felt, for instance a fibrous mat, or textile material, for instance a spacer fabric or a carpet layer.

8. A trim part according to at least one of the preceding claims whereby the trim part further comprises additional layers at least one of a tufted carpet, nonwoven carpet, decorative layer, knit layer, a foam layer, either slab foam or reaction injected foam, another fibrous layer, a thin nonwoven like a scrim or a closed or open film or an anti-skidding layer.

9. A trim part according to claim 8, whereby the cut-out is at least in one additional layer, preferably in all layers.

10. A trim part according to one of the previous claims whereby the facing layer is at least one of a tufted carpet, a nonwoven carpet, a textile fabric, like a knitted fabric, a faux-suede fabric or a woven fabric, a nonwoven fabric, a leather or a closed cell foamed layer, a film, a foil, a thermoplastic polyurethane layer, or a flocked surface layer or any combination of such layers.

11. A trim part according to one of the previous claims whereby at least a glue layer is used between the face layer and the heating element, and/or between the heating element and the air permeable fibrous layer.

12. A trim part according to claim 12 whereby at least the glue layer between the face layer and the heating element is a polyurethane based glue or a polyester based glue.

13. A trim part according to one of the preceding claims wherein the heating element is a metal based or a carbon based resistance element.

14. A trim part according to one of the preceding claims wherein the means-for-connecting comprises at least one of a cable, a plug, a connector, connecting points where wires are connected, a control device, and a sensor device.

15. Use of the trim part according to one of the preceding claims as an interior part, like a floor mat, door trim, parcel shelf, visor part, hush panel or trim parts on or near the dash panel or underneath the dash panel, a trunk trim part or a front stowing area trim part or any trim part or cladding in the passenger compartment, or as an exterior trim part, for instance as a trim part around the engine.

16. Method of producing the automotive trim part with integrated heating device according to one of the preceding claims with at least the steps of
- stacking at least a heating element, and a fibrous layer, whereby the fibrous layer already has a dedicated region and/or cut-out for a connecting zone,
- laminating the stacked layers together,
- connecting the means-for-connecting to the heating element before the lamination step, or after the lamination step,
**characterised in that** the method further comprises the step of local injection moulding a resin to engulf at least part of the means-for-connecting and at least part of the material of the adjacent layer or layers by the resin such that the means-for-connecting are at least partly encapsulated in the thermoplastic resin and materially connected to the adjacent layers.
